# EUROPEAN PATENT APPLICATION

(11) **EP 4 763 578 A1**
(43) Date of publication of application: **24.06.2026**
(21) Application number: 25223944.7
(22) Date of filing: 16.12.2025
(51) Int. Cl.: B60L 3/00

(54) **ROAD VEHICLE COMPRISING A BATTERY PACK MONITORING DEVICE AND AN ALARM SYSTEM AND RESPECTIVE CONTROL METHOD**

(30) Priority: 17.12.2024 IT 202400028728
(71) Applicant: FERRARI S.p.A., 41100 Modena (IT)
(72) Inventor: SALVATI, Federica, 41100 MODENA (IT); AMODEO, Marco, 41100 MODENA (IT); DI NARDO, Lorenzo, 41100 MODENA (IT); TASSINARI, Matteo, 41100 MODENA (IT); CODOVILLI, Francesco, 41100 MODENA (IT)
(74) Representative: Studio Torta S.p.A.

(57) **Abstract**

Road vehicle (1) comprising: a first control unit (12) configured to monitor a plurality of cells of the first storage system (6) so as to detect any thermal events and to periodically awaken when the road vehicle (1) is in a sleep mode; and/or a second control unit (13), different from the first control unit (12), which is configured to operate when the road vehicle (1) is in a sleep mode and to monitor the plurality of cells of the first storage system (6) so as to detect any thermal events;
the vehicle comprises an alarm system (20), which comprises a third control unit (15) which is configured, following a detection of thermal event, to actuate at least part of a plurality of electrical loads (11) so as to alert at least the surroundings of the road vehicle (1) of the occurring thermal event.

## Description

### CROSS-REFERENCE TO RELATED APPLICATIONS

This patent application claims priority from Italian patent application no. 102024000028728 filed on December 17, 2024, the entire disclosure of which is incorporated herein by reference.

### FIELD OF THE ART

The present invention relates to a road vehicle comprising a device for monitoring a battery pack during a sleep mode of the road vehicle and a related alarm system. The present invention also relates to a control method for the road vehicle.

In particular, the present invention finds advantageous, but not exclusive application in a high-performance electric (or hybrid) road vehicle, to which the following description will make explicit reference without thereby losing in generality.

### BACKGROUND OF THE INVENTION

Hybrid or electric vehicles (EV/PHEV/BEV) equipped with at least one electric machine are known, which is electrically connected to an electrical energy storage system, i.e. a battery pack, and is mechanically connected to the driving wheels to transmit to the same driving torque.

The electrical system of a hybrid or electric vehicle usually comprises a high-voltage (in a relative sense, it could also have a nominal voltage of only 48 Volts) and high-power electrical circuit to which the electric machine is connected; the high-voltage electrical circuit comprises a storage device (provided with at least one pack of electrochemical batteries, for example with lithium ions or polymers), and an electronic converter of direct-alternating bidirectional power which on the direct current side is connected to the storage device and on the alternating current side is connected to the electric machine and has the function of driving the electric machine itself.

The electrical system of such vehicles also comprises a low-voltage (having a nominal voltage generally of 12 Volts) and low-power electrical circuit to which all electrical auxiliary services are connected (for example, the control units of all vehicle subsystems, the infotainment system, the anti-theft system, the lighting system of the passenger compartment, the external lights, the electric starter motor of the heat engine in the case of hybrid vehicles, etc.).

In particular, the low-voltage electrical circuit normally also comprises the so-called BMS *(Battery Mangement System)* of the high-voltage storage device. This system, of known type, is responsible for the management and monitoring of the battery pack of the vehicle. In particular, the BMS deals, among other things, with:
- monitoring the status of health of the battery pack, ensuring that it functions correctly and safely.
- managing battery charge and discharge, optimizing the performance and life of the battery pack 2.
- preventing critical situations such as overcurrents, short circuits or accidents, by interrupting the connection between the battery and the rest of the high-voltage circuit if necessary.

In summary, BMS is essential to ensure the safety, efficiency and longevity of the energy storage system in road vehicles.

However, the Battery Management System (BMS) is not always active. In particular, when an electric or hybrid road vehicle enters *"sleep"* mode, for example during a long stop, the BMS is turned off to limit the consumption of the battery pack.

With this turning off, in the event of a thermal event inside the battery pack, i.e. an abnormal increase in the temperature inside the battery pack, which can be caused by various factors, such as a short circuit, an overload, or a malfunction of the battery cells, the vehicle is not able to intervene in a short time, resulting in a non-negligible risk of fire and danger for those in the vicinity of the vehicle.

To avoid these harmful events, the BMS could always be left turned on by mounting a battery pack with specially increased capacity in order to continuously power the BMS. However, in high-performance vehicles, the need to reduce weight and overall dimensions is always felt, so as to maximise vehicle performance, for example on the track, and the addition of additional battery modules, with their relative weights, cannot be easily implemented. In addition, to maximize performance it is important that, even after a sleep mode, the vehicle is as much charged as possible.

Therefore, systems for monitoring the battery pack even during the sleep mode of the road vehicle (by periodically waking up the BMS or through special devices) have been developed in recent years. However, in the event that these systems detect a malfunction (e.g. a thermal event) the vehicle risks catching fire quickly. In such cases, acting promptly is particularly important for both environmental and safety reasons, as other vehicles, people, buildings or things present in the surroundings of the road vehicle may be involved.

It therefore seems necessary to reduce the risk of fires spreading outside the road vehicle or in any case to minimise damage to persons or property caused by them.

### DISCLOSURE OF THE INVENTION

Aim of the present invention is to provide a road vehicle comprising a battery pack monitoring device (during a sleep mode of the road vehicle), an alarm system and a respective control method, which are at least partially free of the drawbacks described above and, at the same time, are convenient and economical to implement.

In accordance with the present invention there are provided a control method and a road vehicle comprising a battery pack monitoring device (during a sleep mode of the road vehicle) and an alarm system as claimed in the following independent claims and, preferably, in any of the claims directly or indirectly dependent on the independent claims.

The claims describe preferred embodiments of the present invention forming an integral part of the present disclosure.

### BRIEF DESCRIPTION OF THE DRAWINGS

The present invention will now be described with reference to the accompanying drawings, showing some non-limiting embodiments thereof, wherein:
- Figure 1 is a plan and schematic view, with details removed for clarity, of a road vehicle in accordance with an embodiment of the present invention;
- Figure 2 shows a diagram of a possible embodiment of the method in accordance with the present invention;
- Figure 3 is a schematic and perspective view of a battery pack of the vehicle of Figure 1 comprising a fire extinguisher system.

### DETAILED DESCRIPTION

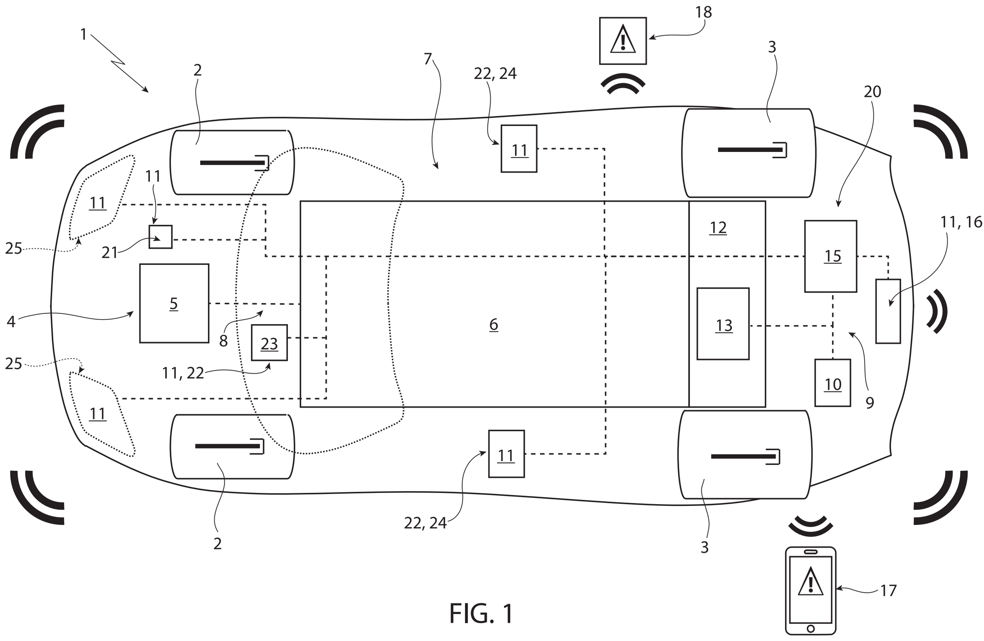

In Figure 1, 1 generally denotes, as a whole, a road vehicle provided with two front wheels 2 and two rear wheels 3, of which at least one pair (or all) receive the driving torque from an electric or hybrid powertrain system 4. The powertrain system 4 can be exclusively electric (i.e. it comprises only one or more electric motors) or hybrid (i.e. it comprises an internal combustion engine and at least one electric motor).

The same reference numbers and letters in the figures identify the same elements or components with the same function.

In the context of the present description, the term "second" component does not imply the presence of a "first" component. These terms are in fact used as labels to improve clarity and should not be understood in a limiting way.

The elements and features shown in the various preferred embodiments, including the drawings, may be combined with each other without thereby departing from the scope of protection of the present application as described below.

The powertrain system 4 preferably comprises at least one electric machine 5, which is driven by an electronic converter (of known type and not shown) of AC/DC power (i.e. an "inverter") which is connected to a first electric energy storage system 6 provided with chemical batteries. The first electrical energy storage system 6 is a vehicular battery pack, thus comprising in turn a plurality of electrochemical cells, for example with lithium ions.

In addition, the road vehicle 1 comprises an electrical system 7, which comprises a high voltage HV electrical circuit 8 (in a relative sense), for example, not in a limiting manner, having a nominal voltage of 1200, 800 or 400 or 48 Volts, and a low voltage LV electrical circuit 9 and, for example, having a nominal voltage of 12 Volts.

It is important to point out that the electrical circuit 8 is called *"high voltage"* as it has a nominal voltage (1200 V, 800 V, 400 V, 48 V) greater than the nominal voltage (12 V) of the electrical circuit 9, i.e. the definition of *"high voltage"* is to be understood as related only to the electrical system 7 and with reference to the electrical circuit 19 having a nominal voltage of 12 Volts.

The high voltage HV electric circuit 8 comprises the first storage system 6 and the electric machine 5 (i.e. the stator windings of the electric machine 5). In particular, the first storage system 6 is configured to power the electric machine 5.

According to some preferred non-limiting embodiments, the low voltage LV electrical circuit 9 comprises a second storage system 10 (also obviously with the same voltage as the electrical circuit 9) and a plurality of electrical loads 11, each of which is only able to absorb electrical energy for its operation (i.e. none of these electrical loads 11 is able to generate electrical energy). In other words, the second storage system 10 is configured to power the plurality of electrical loads 11.

The second storage system 10 has a lower voltage than the first storage system 6.

Advantageously but not necessarily, the electrical loads 11 comprise for example an alarm system 20, the horn 21, an infotainment system 22, inverter control electronic control units, BMS, steer by wire, active suspensions, external lights, an air conditioning system (not shown), the operation of the windows, the car radio, the navigation system, a connection system with the user's smartphone or hazard light signalling, etc.

Advantageously but not in a limiting manner, the electrical system 7 further comprises a control unit ("ECU") 12. Physically, the control unit 12 can be composed of a single device or of several devices separated from each other and communicating through the CAN network or any other data network of the road vehicle 1.

Preferably, the control unit 12 comprises (is) a BMS management system of the first storage system 6 and is powered by the second storage system 10. In particular, the BMS management system is configured to monitor the correct status of health of the aforesaid cells and to manage the first storage system 6 by means of known and not further detailed techniques, as previously indicated.

In some non-limiting cases, the vehicle 1 is configured such that the control unit 12 periodically awakens to monitor the status of the first storage system 6.

In other non-limiting cases, the vehicle 1 comprises a second control unit 13, different from the first control unit 12, which is configured to operate when the road vehicle 1 is in a sleep mode, for example after a long stop, during which the first control unit 1, i.e. the BMS, is turned off.

The first control unit 12 or the second control unit 13 are respectively configured to monitor at least voltage and temperature of the plurality of cells of the first storage system 6, i.e. of the vehicular battery pack.

In particular, this monitoring is carried out by connecting the first unit 12 and optionally the second control unit 13 to devices known as CSC (Cell Sensor Circuit), which are decentralized components of the BMS of known type that deal, for each cell or for a limited group of cells, with cell balancing, temperature and voltage monitoring. These signals are shared with the BMS, i.e. with the first control unit 12 during the awakening step of the vehicle (i.e. a non-sleep mode). Conversely, during a sleep mode, these signals are preferably intercepted by the second control unit 13, which allows to continue monitoring the cells and therefore the health of the first storage system 6.

Thus, the first control unit 12 and/or the second control unit 13, the plurality of cells of the first storage system 6 are configured so as to detect any thermal events during a sleep mode of the road vehicle 1.

As previously mentioned, advantageously, the vehicle 1 comprises an alarm system 20, which comprises a third control unit 15, which is configured, following a detection of thermal event (for example a *thermal runaway,* detectable according to known methods by voltage and/or temperature monitoring of the cells) by the first control unit 12 or the second control unit 13, to actuate at least part (some) of a plurality of electrical loads 11 so as to alert at least the surroundings (i.e. the surrounding area) of the road vehicle 1 of the occurring thermal event.

Preferably but not in a limiting manner, the plurality of electrical loads 11 configured to be actuated by the third control unit 15 comprises a horn 21, which is configured to be operated by the unit 15 following a command H so as to warn those in the vicinity of the road vehicle 1 of danger. In particular, the horn 21 is operated intermittently, so as to imply an alert status.

Alternatively or in addition, the plurality of electrical loads 11 configured to be actuated by the third control unit 15 comprises an infotainment system 22, which in turn comprises one or more screens 23 configured (for example a central screen on a vehicle dashboard, a cluster or a passenger screen) to display warning information or messages. In this way, if a passer-by were in the vicinity of the vehicle 1 or was alerted by the horn 21 or other electrical loads 11 activated by the unit 15, by looking inside the vehicle he/she could immediately understand the risk and evacuate the area.

Similarly, alternatively or in addition, the infotainment system 22 comprises audio devices 24 (e.g. loudspeakers) which are configured to play audible warning signals perceptible outside the road vehicle 1. For example, by turning up to the maximum the volume of the stereo system usually already present inside a road vehicle, it is possible to make the audio message audible outside despite the vehicle having no door or windows open.

Advantageously but not in a limiting manner, wherein the plurality of electrical loads 11 configured to be actuated by the third control unit 15 comprises one or more vehicular lights 25, front and/or rear, in particular turn signals (in a combined manner, as in case of emergency, hazard lights). Obviously, any type of light installed on board the road vehicle 1 can be used to attract as much attention as possible (headlights, fog lamps, interior lights, position lights, etc.).

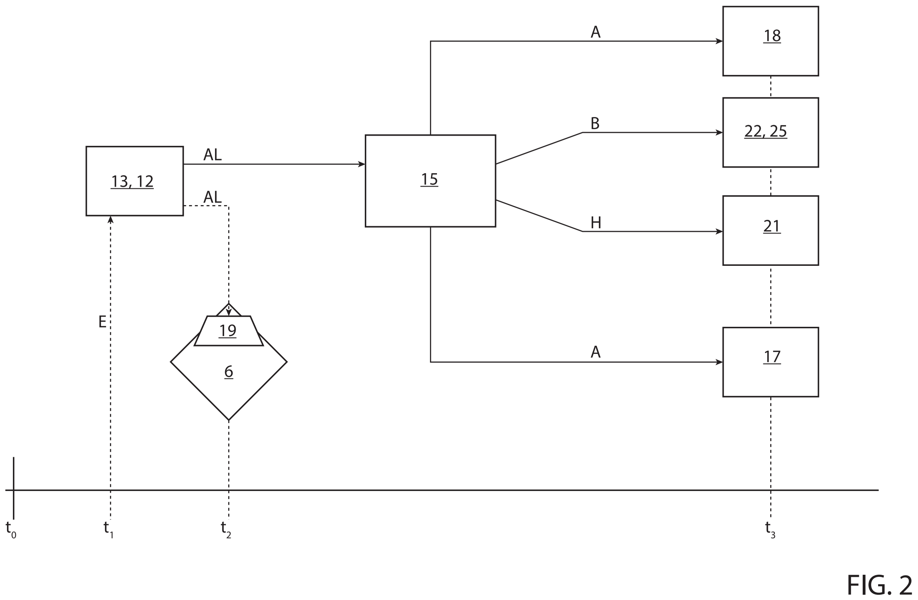

According to a preferred but non-limiting embodiment, as shown in Figures 1 and 2, the plurality of electrical loads 11 configured to be actuated by the third control unit 15 comprises a transmission unit 16 for sending alarm signals A to remote devices, in particular to a mobile device 17 of a user of the road vehicle 1 or to receiving devices 18 of security guarantor entities, in particular law enforcement or fire department. In this way, both the user of the road vehicle 1, as well as law enforcement, fire department and/or rescuers of all kinds (optionally also based on the country in which the road vehicle 1 is located, which can be set or detected by GPS or mobile network). Thanks to the signal A, even in case of the user being extremely distant, it is possible to minimize the risk given by the thermal event thanks to the local authorities, which can intervene in the light of the alarm signal A, which also contains the position of the road vehicle 1 to allow a prompt intervention.

According to some non-limiting embodiments, the third control unit 15 is configured to detect, for example by means of radar sensors (of known type and therefore not further detailed below), the presence or absence of people in the proximity of the road vehicle 1, so as to selectively activate only some of the plurality of electrical loads 11. For example, in the event that the vehicle 1 detects the presence of people, horns 21 and lights 25 may be operated, as well as the infotainment system 22. On the contrary, in the event that the vehicle 1 detects the absence of people in the vicinity thereof, it would basically be useless activating the lights 25 and the screens 23, while the horn 21 could still be perceived, which would then be activated by the alarm system 20, as well as optionally the transmission unit 16.

In some non-limiting cases, the third control unit 15 is configured to detect the presence of a user in or near the road vehicle 1 (for example by detecting a vehicle key), so as to selectively activate only some of the plurality of electrical loads. In this case, in fact, it is sufficient for the vehicle 1 to warn the user (who is for example resting inside the car or is waiting for a sufficient time to let the vehicle enter the sleep mode).

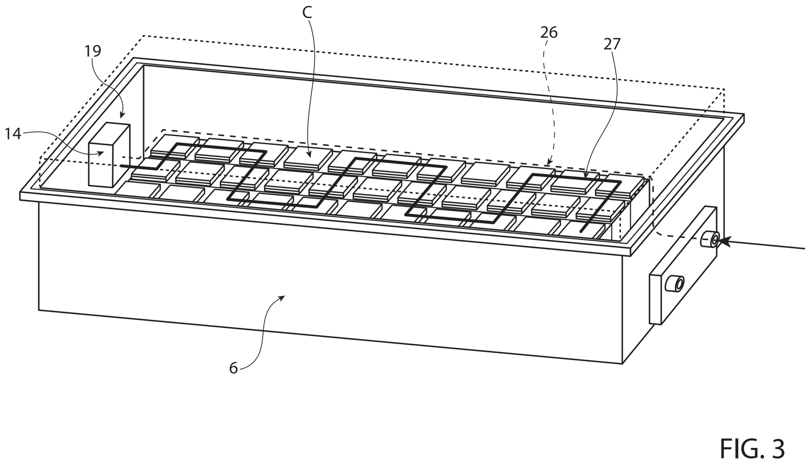

Advantageously but not in a limiting manner, and as shown in Figures 2 and 3, the road vehicle 1 comprises a system 19 of fire extinguishers arranged within the first storage system 6. In particular, the plurality of electrical loads 11 configured to be actuated by the third control unit 15 also comprise the fire extinguisher system 19 activatable upon detection of a thermal event. In other words, once the unit 12 or the unit 13 detects a thermal event, the unit 15, in addition to optionally activating all the electrical loads 11 described above, also actuate the fire extinguisher system 19, which, for example by means of a small detonation, emits a flame-retardant aerosol inside the battery pack, suffocating any flames.

In particular, the fire extinguisher system 19 comprises devices of known type, using suitable foams or powders based on the type of chemistry of the cells that make up the first storage system 6.

In accordance with a further aspect of the present invention, there is provided a control method for a road vehicle 1 as described above.

The method comprises the steps of:
- monitoring, via the first control unit 12 and/or the second control unit 13, the plurality of cells in the first storage system 6 so as to detect any thermal events during a sleep mode of the road vehicle 1;
- actuating, via the alarm system 20, at least part of the plurality of electrical loads 11 so as to alert at least the surroundings of the road vehicle 1 of the occurring thermal event.

The step of actuating preferably comprises a step of commanding the horn 21 so as to warn those in the proximity of the road vehicle 1 about the danger; in particular the horn 21 is actuated intermittently.

Advantageously but not in a limiting manner, the step of actuating comprises a step of operating an infotainment system 22, which in turn comprises one or more screens 23 that display warning information/messages and/or audio devices 24 that play audible warning signals perceptible outside the road vehicle 1.

Alternatively or in addition, the step of actuating step comprises a step of controlling the one or more vehicular, front and/or rear lights 25, in particular turn signals, more in particular intermittently.

Advantageously but not in a limiting manner, wherein the actuating step comprises a step of commanding the transmission unit 16 for sending signals A of alarm to remote devices, in particular to a mobile device 17 of a road vehicle user 1 or to a receiving device 18 of security guarantor entities, in particular law enforcement or fire department.

Preferably but not in a limiting manner, the method comprises the further step of detecting, for example by radar sensors, the presence or absence of people in the proximity of the road vehicle 1, or the presence of a user in or near the road vehicle 1, so as to selectively activate (for example as indicated above) only some of the plurality of electric loads 11.

Advantageously but not necessarily, the method comprises the further step of actuating, in the event of a thermal event, a system 19 of fire extinguishers arranged within the first storage system 6.

In the non-limiting embodiment of Figure 3, the first storage system 6, i.e. the battery pack, is schematically shown in order to display the interior, where the fire extinguisher system 19 can be found, which comprises an aerosol extinguishing device (for example), which is powered by a cable 26 and can be activated/detonated upon command of the unit 12 or 15, or independently detecting any thermal events via a detection cable 27).

Advantageously but not necessarily, the low voltage LV is equal to or less than 48 V, in particular equal to 12 V.

Advantageously but not necessarily, the high voltage HV is equal to or greater than 48 V, in particular equal to 48 V, preferably equal to or greater than 400 V, in particular 400 V or 800 V or 1200 V.

In use, therefore, as shown in the embodiment of Figure 3, during a sleep mode of the road vehicle 1 in which the first control unit 12, i.e. the BMS, is turned off, a potentially dangerous thermal event occurs at time t₀. Next, thanks to a programmed awakening of the first unit 12 or a continuous monitoring of the second control unit 13, the voltage and temperature from each CSC of the first storage device 6 is checked, thus monitoring the status of health of the cells that compose it. It is then evaluated whether at least one of the voltages or temperatures detected is outside predefined safety threshold values. In case of them being overcome, at time t₁, the unit 12 or the unit 13 detects the event E and sends an alarm signal AL to the third control unit 15, i.e. the VCU, which commands (via alarm signals B, H) horn 21, infotainment system 22, lights 25, and warnings A so as to alert a user of the road vehicle 1 via the mobile device 17 and especially the law enforcement via the receiving device 18, so as to be able to restore a safety situation as soon as possible.

Although the above-described invention makes particular reference to a very specific embodiment example, it is not limited to that embodiment example, since all those variations, modifications or simplifications covered by the appended claims, such as different types of storage systems, verification devices or different measurement methods, etc., fall within its scope.

The embodiments described herein can be combined with each other without departing from the scope of protection of the present invention.

The vehicle and method described above have numerous advantages.

First of all, even during the sleep mode of the vehicle 1, they allow to maintain a continuous or in any case frequent monitoring of the battery pack, significantly increasing safety.

In addition, in case of detection of a thermal event, it is made possible to immediately warn those in the proximity of the vehicle 1 in order to make them perceive the danger and law enforcement.

Finally, the fire extinguisher systems can be activated in addition to the above, further increasing safety and preventing the spread of fires.

### LIST OF REFERENCE NUMBERS OF THE FIGURES

- 1: road vehicle
- 2: front wheels
- 3: rear wheels
- 4: powertrain system
- 5: electric machine
- 6: storage system
- 7: electrical system
- 8: high-voltage electrical circuit
- 9: low-voltage electrical circuit
- 10: second storage system
- 11: electrical loads
- 12: first control unit (BMS)
- 13: second control unit
- 14: aerosol device
- 15: third control unit
- 16: transmission unit
- 17: mobile device
- 18: receiving devices
- 19: fire extinguisher system
- 20: alarm system
- 21: horn
- 22: infotainment system
- 23: screens
- 24: audio devices
- 25: vehicular lights
- 26: cable
- 27: detection cable
- A: warning
- AL: signal
- B: signal
- E: event
- H: command

## Claims

1. Road vehicle (1) comprising:
- four wheels (2, 3), of which at least one pair of wheels (2, 3) are driving wheels;
- an electric or hybrid powertrain system (4);
- an electrical system (7), which in turn comprises:
a high-voltage (HV) electric circuit (8) provided with a first electrical energy storage system (6) comprising a plurality of cells, and at least one electric machine (5) for moving electric or hybrid powertrain system (4); wherein the first storage system (6) is configured to power the electric machine (5);
a low-voltage (LV) electric circuit (9) provided with a second electrical energy storage system (10) and a plurality of electric loads (11); wherein the second storage system (10) is configured to power the plurality of electric loads (11);
the road vehicle (1) further comprising:
- a first control unit (12), in particular a management system (BMS) of the first storage system (6) powered by the second storage system (10); the first control unit (12) being configured to monitor the plurality of cells of the first storage system (6) so as to detect any thermal events; the first control unit (12) being configured to awaken periodically when the road vehicle (1) is in a sleep mode; and/or
- a second control unit (13), different from the first control unit (12), which is configured to operate when the road vehicle (1) is in a sleep mode, during which the first control unit (12) is turned off; the second control unit (13) being configured to monitor the plurality of cells of the first storage system (6) so as to detect any thermal events;
the vehicle being **characterized by** comprising an alarm system (20), which comprises a third control unit (15), which is configured, following a detection of thermal event by the first control unit (12) or the second control unit (13), to actuate at least part of a plurality of electrical loads (11) so as to alert at least the surroundings of the road vehicle (1) of the occurring thermal event.

2. Road vehicle (1) according to claim 1, wherein the plurality of electrical loads (11) configured to be actuated by the third control unit (15) comprises a horn (21), which is configured to be operated so as to warn those in the vicinity of the road vehicle (1) of danger.

3. Road vehicle (1) according to claim 1, wherein the plurality of electrical loads (11) configured to be actuated by the third control unit (15) comprises an infotainment system (22), which in turn comprises one or more screens (23) configured to display warning information and/or audio devices (24) configured to play audible warning signals perceptible outside the road vehicle (1).

4. Road vehicle (1) according to any one of the preceding claims, wherein the plurality of electrical loads (11) configured to be actuated by the third control unit (15) comprises one or more vehicular lights (25), front and/or rear, in particular turn signals.

5. Road vehicle (1) according to any one of the preceding claims, wherein the plurality of electrical loads (11) configured to be actuated by the third unit (15) of control comprises a transmission unit (16) for sending alarm signals to remote devices, in particular to a mobile device (17) of a user of the road vehicle or to a receiving device (18) of security guarantor entities, in particular law enforcement or fire department.

6. Road vehicle (1) according to any one of the preceding claims, wherein the third control unit (15) is configured to detect, for example by radar sensors, the presence or absence of people in the proximity of the road vehicle (1) so as to selectively activate only some of the plurality of electrical loads (11).

7. Road vehicle (1) according to any one of the preceding claims, wherein the third control unit (15) is configured to detect the presence of a user in or near the road vehicle (1), so as to selectively activate only some of the plurality of electrical loads (11).

8. Road vehicle (1) according to any one of the preceding claims and comprising a fire extinguisher system (19) arranged within the first storage system (6); the plurality of electrical loads (11) configured to be actuated by the third control unit (15) also comprising the fire extinguisher system (19) operable upon detection of a thermal event.

9. A control method for a road vehicle (1) according to any one of the preceding claims; the method comprises the steps of:
- monitoring, via the first control unit (12) and/or the second control unit (13), the plurality of cells in the first storage system (6) so as to detect any thermal events during a sleep mode of the road vehicle (1);
the method being **characterized in that** it comprises the further steps of:
- actuating, via the alarm system (20), at least part of the plurality of electrical loads (11) so as to alert at least the surroundings of the road vehicle (1) of the occurring thermal event.

10. Method according to claim 9, wherein the step of actuating comprises a step of commanding a horn (21) so as to warn those in the proximity of the road vehicle (1) about the danger; in particular, the horn (21) is actuated intermittently.

11. Method according to claim 9 or 10, wherein the actuating step comprises a step of operating an infotainment system (22), which in turn comprises one or more screens (23) that display warning information and/or audio devices (24) that play audible warning signals perceptible outside the road vehicle (1).

12. Method according to any one of claims 9 to 11, wherein the actuating step comprises a step of controlling one or more vehicular, front and/or rear lights (25), in particular turn signals; in particular intermittently.

13. Method according to any one of claims 9 to 12, wherein the actuating step comprises a step of commanding a transmission unit (16) for sending signals (A) of alarm to remote devices, in particular to a mobile device (17) of a road vehicle user (1) or to a receiving device (18) of security guarantor entities, in particular law enforcement or fire department.

14. Method according to any one of claims 9 to 13 and further comprising the step of detecting, for example by radar sensors, the presence or absence of people in the proximity of the road vehicle (1), or the presence of a user in or near the road vehicle (1), so as to selectively activate only some of the plurality of electrical loads (11).

15. Method according to any one of claims 9 to 14 and comprising the further step of actuating, in the event of a thermal event, a system (19) of fire extinguishers arranged within the first system (6) of storage.
